# EUROPÄISCHE PATENTSCHRIFT

(11) **EP 2 773 527 B1**
(45) Veröffentlichungstag und Bekanntmachung des Hinweises auf die Patenterteilung: **03.02.2016**
(21) Anmeldenummer: 12778241.5
(22) Anmeldetag: 17.10.2012
(51) Int. Cl.: B60N 2/46, B60N 3/10, B60R 7/04

(54) **MITTELKONSOLE**
MIDDLE CONSOLE
CONSOLE CENTRALE

(30) Priorität: 05.11.2011 DE 102011117737
(43) Veröffentlichungstag der Anmeldung: 10.09.2014
(73) Patentinhaber: Daimler AG, 70327 Stuttgart (DE)
(72) Erfinder: DUENAS, Santiago, 72119 Ammerbuch (DE); GOLDBECK, Kai, 70567 Stuttgart (DE); NIESSNER, Marco, 71063 Sindelfingen (DE)
(74) Vertreter: JENSEN & SON
(86) Internationale Anmeldenummer: PCT/EP2012/004333
(87) Internationale Veröffentlichungsnummer: WO 2013/064213

(56) Entgegenhaltungen:
- EP-A1- 1 055 552
- DE-A1- 19 542 198
- DE-A1-102004 057 016
- DE-C1- 19 615 743
- FR-A1- 2 792 590
- US-A- 6 045 173

## Beschreibung

Die vorliegende Erfindung betrifft eine Mittelkonsole eines Kraftfahrzeuges mit einem zu öffnenden Deckel, der in seiner Schließstellung ein darunter gelegenes Staufach verschließt und in einer Offenstellung dieses freigibt, gemäß dem Oberbegriff des Anspruchs 1. Die Erfindung betrifft außerdem ein mit einer derartigen Mittelkonsole ausgestattetes Kraftfahrzeug.

Aus der US 4 848 627 ist eine gattungsgemäße Mittelkonsole, eines Kraftfahrzeugs mit einem in bekannter Weise nach hinten aufklappbaren Deckel bekannt.

Die US 6 045 173 A offenbart eine Mittelkonsole eines Kraftfahrzeugs nach dem Oberbegriff des Anspruchs 1, mit einem zu öffnenden Deckel, der in seiner Schließstellung ein darunter liegendes Staufach verschließt und in einer Offenstellung dieses freigibt.

Ferner offenbart die DE 10 2004 057 016 A1 einen Öffnungs- und Schließmechanismus zur Öffnung einer Deckel-Einrichtung einer Ablagefach-Einrichtung, die aus einem ersten und einem zweiten Deckel-Element gebildet ist, mit zwei Hebel-Anordnungen. Dabei ist es vorgesehen, dass die Hebel-Anordnungen jeweils an zwei gegenüberliegenden Innenwänden der Ablagefach-Einrichtung gegenüber einer Mittelachse in zueinander spiegelverkehrten Orientierungen angeordnet sind, sodass jedes der Deckel-Elemente auf das jeweils andere beweglich ist.

Nachteilig bei den bekannten Mittelkonsolen ist, dass ein darunter angeordnetes Staufach nur bei einem vollständigen Öffnen des Deckels gut zugänglich ist, wobei jedoch bereits das vollständige Öffnen für insbesondere körperlich beeinträchtigte Personen Schwierigkeiten bereiten kann. Zwar gibt es auch gänzlich lediglich in Fahrzeuglängsrichtung verschiebbare Deckel zum Verschließen bzw. Öffnen eines darunter gelegenen Staufachs, diese sind jedoch wiederum in ihrer Funktion auf die reine Schiebebewegung begrenzt.

Die vorliegende Erfindung beschäftigt sich daher mit dem Problem, für eine Mittelkonsole der gattungsgemäßen Art eine verbesserte Ausführungsform anzugeben, die insbesondere eine erhöhte Funktionalität aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen gänzlich neuartigen Verstellmechanismus zum Verstellen eines ein Staufach in einer Mittelkonsole verschließenden Deckels anzugeben, der eine Kombination aus einer translatorischen Schiebebewegung und einer Schwenkbewegung ermöglicht und dadurch unterschiedlichste Schließzustände des darunter angeordneten Staufachs ermöglicht, die mit bisher rein translatorisch verstellbaren oder lediglich rein schwenkbaren Deckeln nicht zu realisieren wären. Der erfindungsgemäße Verstellmechanismus ist dabei derart ausgebildet, dass er den Deckel beim Öffnen zunächst leicht anhebt und nach hinten verstellt und erst anschließend nach oben aufschwenkt. Dies bietet den großen Vorteil, dass der Verstellmechanismus zunächst eine im Wesentlichen translatorische Verschiebebewegung entgegen der Fahrtrichtung nach hinten ermöglicht und dadurch bereits im vorderen Bereich des darunter gelegenen Staufachs angeordnete Getränkehalter freigibt. Mittels des erfindungsgemäßen Verstellmechanismus ist somit ein Öffnen des Deckels Ober eine zunächst im Wesentlichen reine Verschiebebewegung mit einer sich daran anschließenden Drehbewegung möglich. Die Bewegung des Deckels kann dabei bspw. über entsprechende Rastelemente stufenweise eingestellt werden, sodass der erfindungsgemäße Deckel auch in sämtlichen Zwischenstellungen zwischen seiner Schließstellung und seiner vollständigen Offenstellung sicher gehalten ist.

Erfindungsgemäß weist der Verstellmechanismus einen Führungsschlitten auf, der über zwei Parallelogrammträgerpaare mit der Mittelkonsole verbunden ist. Ferner ist der Deckel an dem Führungsschlitten heckseitig über ein Schanier schwenkbar gelagert. Die Parallelogrammträgerpaare ermöglichen dabei eine erste Öffnungsstufe, in welcher der Deckel lediglich leicht angehoben, im Wesentlichen aber translatorisch nach hinten verstellt wird, sowie eine zweite Öffnungsstufe, die sich an die erste Öffnungsstufe anschließt und in welcher der Deckel dann eine bisher bekannte Aufklappbewegung ausführt und dadurch das darunter gelegene Staufach vollständig öffnet. Der erfindungsgemäße Führungsschlitten mit seinen zwei Parallelogrammträgerpaaren ist dabei konstruktiv vergleichsweise einfach und dadurch auch kostengünstig herzustellen, sodass der erfindungsgemäße Verstellmechanismus nicht nur einfach, sondern zugleich auch kostengünstig angeboten werden kann.

Bei einer vorteilhaften Weiterbildung der erfindungsgemäßen Lösung sind im Staufach zwei, insbesondere entnehmbare, Getränkehalter vorgesehen. Die beiden Getränkehalter ermöglichen dabei ein nebeneinander Abstellen zweier Getränkebehälter, wobei die erfindungsgemäßen Getränkehalter üblicherweise in einem vorderen Bereich des durch den Deckel verschließbaren Staufachs angeordnet sind. Durch eine entnehmbare Ausgestaltung der erfindungsgemäßen Getränkehalter können diese bei Nichtgebrauch einfach entnommen und dadurch der Stauraum des Staufachs vergrößert werden. Durch den Verstellmechanismus ist es dabei möglich, den Deckel in der ersten Öffnungsstufe so weit nach hinten zu verstellen, dass die beiden Getränkehalter leicht zugänglich sind und damit Getränke in diesen abgestellt werden können, wogegen das übrige Staufach vom Deckel noch verschlossen ist und dadurch zugleich eine Armauflage für den Fahrer oder Beifahrer bildet. Generell ermöglicht die verschiebbare Lagerung des Deckels in seiner ersten Öffnungsstufe auch ein Anpassen an unterschiedliche Fahrzeuginsassen, sodass diese eine stets bequeme Armauflage leicht einstellen können.

Zweckmäßig sind in Fahrtrichtung vor dem Deckel eine Zentralbedienungseinheit, ein Aschenbecher, ein Staufach und/oder ein weiterer Getränkehalter angeordnet. Durch den, erfindungsgemäßen Deckel und den zugehörigen Verstellmechanismus ist es insbesondere möglich, die Zentralbedienungseinheit weiter vorne und damit in einer ergonomisch deutlich günstigeren Position anordnen zu können. Darüber hinaus ermöglicht es die erfindungsgemäße Mittelkonsole in einem Heckbereich sämtliche dort erforderlichen Elemente, wie bspw. Fonddüsen wie eine Fondklimaanlage, sowie ein Ablagefach oder ein Aschenbecher, vorzusehen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Mittelkonsole mit einem Staufach, das von einem Deckel verschlossen ist,
- Fig. 2: den Deckel in seiner ersten Öffnungsstufe,
- Fig. 3: eine Darstellung wie in Fig. 2, jedoch mit eingestellten Getränkebehältern, und
- Fig. 4: der Deckel in seiner zweiten Öffnungsstufe, d. h. bei vollständig geöffnetem Staufach.

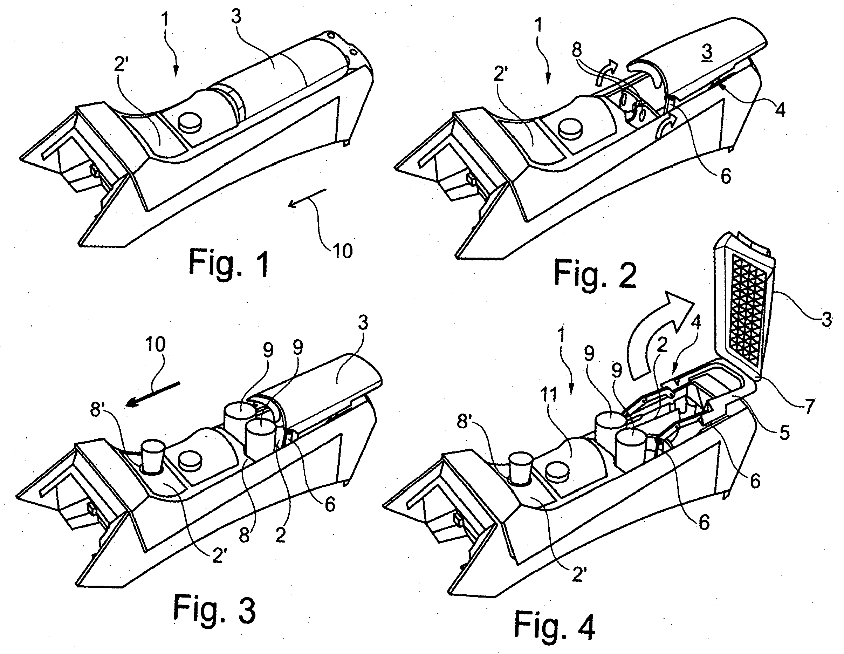

Entsprechend den Figuren 1 bis 4, weist eine Mittelkonsole 1 eines im Übrigen nicht gezeigten Kraftfahrzeugs ein Staufach 2 auf (vgl. die Figuren 2 bis 4), welches von einem darüber angeordneten Deckel 3 verschließbar ist. Erfindungsgemäß ist nun ein Verstellmechanismus 4 zum Verstellen und Öffnen des Deckels zwischen seiner Offenstellung (vgl. Fig. 1) und seiner Schließstellung (vgl. Fig. 4), wobei der Verstellmechanismus 4 derart ausgebildet ist, dass dieser den Deckel 3 beim Öffnen zunächst leicht anhebt und nach hinten verstellt (vgl. die Figuren 2 und 3) und anschließend nach oben aufschwenkt (vgl. Fig. 4). Die Öffnungsbewegung des Deckels 3 ist somit in zwei Öffnungsstufen unterteilt, nämlich eine gemäß den Figuren 2 und 3 dargestellte erste Öffnungsstufe, in welcher der Deckel 3 leicht angehoben und ansonsten nur nach hinten verschoben wird, und eine zweite Öffnungsstufe gemäß der Fig. 4, in welcher der Deckel 3 nach oben aufgeschwenkt wird.

Der erfindungsgemäße Verstellmechanismus 4 weist dabei einen Führungsschlitten 5 auf, der über zwei Parallelogrammträgerpaare 6 mit der Mittelkonsole 1 verbunden ist. In der ersten Öffnungsstufe gemäß den Figuren 2 und 3 wird somit der Führungsschlitten 5 lediglich über die beiden Parallelogrammträgerpaare 6 leicht nach oben und ansonsten ausschließlich nach hinten verschoben. Der Deckel 3 ist heckseitig über ein Scharnier 7 am Führungsschlitten 5 schwenkbar gelagert, wie dies eindeutig der Fig. 4 zu entnehmen ist.

Betrachtet man die Figuren 3 und 4, so kann man erkennen, dass im Staufach 2 zwei Getränkehalter 8 vorgesehen sind, in welchen zwei Getränkebehälter 9 (vgl. Figuren 3 und 4) nebeneinander abgestellt werden können. Die Getränkehalter 8 sind dabei vorzugsweise entnehmbar ausgebildet, sodass ein Stauvolumen des Staufachs 2 deutlich vergrößert werden kann, sofern die Getränkehalter 8 entnommen werden.

In Fahrtrichtung 10 gesehen vor dem Deckel 3 kann eine Zentralbedienungseinheit 11, ein Aschenbecher, ein weiteres Staufach 2' und/oder ein weiterer Getränkehalter 8' angeordnet sein. Selbstverständlich kann dabei auch der weitere Getränkehalter 8' entnehmbar ausgebildet sein, wodurch das Volumina des weiteren Staufachs 2' im Sinne einer Spontanablage vergrößert werden kann. Denkbar ist auch, dass lediglich die beiden im Staufach 2 angeordneten Getränkehalter 8 vorgesehen sind, wodurch der Platz des weiteren Staufachs 2' für weitere Bedienelemente, bspw. Audio- oder Videoeinrichtungen, genutzt werden kann. Von besonderem Vorteil ist auch das Vorsehen von sog. "Spontanablagen", die im Wesentlichen einem leeren Staufach 2,2' entsprechen.

Durch den erfindungsgemäßen Verstellmechanismus 4 ist insbesondere die Anordnung der Zentralbedieneinheit 11 weiter vorne und dadurch ergonomisch günstiger möglich. Durch die translatorische Verschiebbarkeit des Deckels 3 in der ersten Öffnungsstufe ist zudem bei Vorsehen einer geeigneten Verrastung ein lediglich teilweises Öffnen des Staufachs 2 denkbar, wie dies bspw. gemäß den Figuren 2 und 3 dargestellt ist. Auch ist es einem Fahrer oder Beifahrer des Kraftfahrzeugs möglich, eine bequeme Armauflage durch eine entsprechende Positionierung des Deckels 3 in oder entgegen der Fahrtrichtung 10 zu schaffen. Von besonderem Vorteil bei dem erfindungsgemäßen Verstellmechanismus 4 zum Verstellen des Deckels 3 ist, dass dieser in der ersten Öffnungsstufe (vgl. Figuren 2 und 3) das übrige Staufach 2 verdeckt und lediglich die beiden Getränkehalter 8 freigibt, sodass der Fahrer bzw. Beifahrer den jeweiligen Getränkebehälter 9 im zugehörigen Getränkehalter 8 leicht abstellen bzw. aus diesem entnehmen und sich dabei mit dem Unterarm bzw. Ellenbogen auf dem Deckel 3 abstützen kann.

Der erfindungsgemäße Verstellmechanismus 4 ist darüber hinaus konstruktiv einfach und kostengünstig herzustellen, sodass der durch die Erfindung gewonnene Zusatznutzen mit marginalen Mehrkosten erzielbar ist.

## Patentansprüche

1. Mittelkonsole (1) eines Kraftfahrzeugs mit einem zu öffnenden Deckel (3), der in seiner Schließstellung ein daruntergelegenes Staufach (2) verschließt und in einer Offenstellung dieses freigibt, wobei
ein Verstellmechanismus (4) zum Verstellen und Öffnen des Deckels (3) zwischen seiner Offenstellung und seiner Schließstellung vorgesehen ist, **dadurch gekennzeichnet, dass** der Verstellmechanimus (4) einen über zwei Parallelogrammträgerpaare (6) mit der Mittelkonsole (1) verbundenen Führungsschlitten (5), an welchem der Deckel (3) heckseitig über ein Scharnier (7) schwenkbar gelagert ist, aufweist, so dass der Verstellmechanismus (4) den Deckel (3) beim Öffnen zunächst anhebt und nach hinten verstellt und anschließend nach oben aufschwenkt.

2. Mittelkonsole nach einem Anspruch 1,
**dadurch gekennzeichnet, dass**
im Staufach (2) zwei, insbesondere entnehmbare, Getränkehalter (8) vorgesehen sind.

3. Mittelkonsole nach einem der vorhergehenden Ansprüche,
**dadurch gekennzeichnet, dass**
in Fahrtrichtung (10) vor dem Deckel (3) eine Zentralbedieriungseinheit (11), ein Aschenbecher, ein weiteres Staufach (2') und/oder ein weiterer Getränkehalter (8') angeordnet ist.

4. Kraftfahrzeug mit einer Mittelkonsole (1) nach einem der vorhergehenden Ansprüche.

## Claims

1. Centre console (1) of a motor vehicle, comprising a cover (3), which can be opened and which closes a stowage compartment (2) located below in its closed position and opens it in its open position, wherein an adjusting mechanism (4) is provided for adjusting and opening the cover (3) between its open position and its closed position,
**characterised in that**
the adjusting mechanism (4) comprises a guide block (5), which is connected to the centre console (1) via two pairs of parallelogram members (6) and on which the cover (3) is pivotably mounted at the rear via a hinge (7), so that the adjusting mechanism (4) in the opening process first raises the cover (3) and moves it towards the rear and then pivots it upwards.

2. Centre console according to claim 1,
**characterised in that**
two, in particular removable, beverage holders (8) are provided in the stowage compartment (2).

3. Centre console according to any of the preceding claims,
**characterised in that**
a central control unit (11), an ashtray, a further stowage compartment (2') and/or a further beverage holder (8') is/are arranged in the direction of travel (10) in front of the cover (3).

4. Motor vehicle with a centre console (1) according to any of the preceding claims.

## Revendications

1. Console centrale (1) d'un véhicule automobile dotée d'un couvercle (3) pouvant s'ouvrir qui ferme dans sa position de fermeture un compartiment de rangement (2) placé en dessous et le libère dans une position d'ouverture, un mécanisme de déplacement (4) est prévu pour déplacer et ouvrir le couvercle (3) entre sa position d'ouverture et sa position de fermeture, **caractérisée en ce que** le mécanisme de déplacement (4) présente un coulisseau de guidage (5) relié à la console centrale (1) par l'intermédiaire de deux paires de supports parallélogrammes, le couvercle (3)côté arrière étant monté pivotant par le biais d'une charnière (7) sur ledit coulisseau de guidage, de manière que le mécanisme de déplacement (4) soulève en premier lieu le couvercle (3) lors de son ouverture et le déplace vers l'arrière et ensuite le fait basculer vers l'avant.

2. Console centrale selon la revendication 1, **caractérisée en ce que** dans le compartiment de rangement (2) comprend deux porte-gobelets (3), en particulier, amovibles.

3. Console centrale selon l'une quelconque des revendications précédentes, **caractérisée en ce que** dans le sens de la marche (10) en amont du couvercle (3) sont disposés une unité de commande centrale (11), un cendrier, un autre compartiment de rangement (2') et/ou un autre porte-gobelet (8').

4. Véhicule automobile doté d'une console centrale (1) selon l'une quelconque des revendications précédentes.
